# EUROPEAN PATENT SPECIFICATION

(11) **EP 3 916 373 B1**
(45) Date of publication and mention of the grant of the patent: **02.10.2024**
(21) Application number: 20177287.8
(22) Date of filing: 29.05.2020
(51) Int. Cl.: G01N 1/14, G01N 1/20, G01N 1/10

(54) **ANALYTE COLLECTION FOR ANALYSIS OF LIQUIDS**
ANALYTSAMMLUNG ZUR ANALYSE VON FLÜSSIGKEITEN
COLLECTE D'ANALYTE POUR L'ANALYSE DE LIQUIDES

(43) Date of publication of application: 01.12.2021
(73) Proprietor: Universiteit Antwerpen, 2000 Antwerpen (BE)
(72) Inventor: BLUST, Ronny, 2600 Berchem (BE); DARDENNE, Freddy, 2550 Kontich (BE); AMATO, Elvio, 2000 Antwerpen (BE); TOWN, Raewyn, 2660 Hoboken (BE); DU BOIS, Els, 2520 Ranst (BE); HERWEYERS, Laure, 2018 Antwerpen (BE)
(74) Representative: Winger

(56) References cited:
- EP-A1- 3 225 971
- CN-A- 107 037 193
- US-A- 5 172 332
- US-A1- 2004 123 681
- US-A1- 2019 271 615
- AMATO ELVIO D ET AL: "Characterization of the accumulation of metals and organic contaminants on a novel active-passive sampling device under controlled water flow conditions", CHEMOSPHERE, PERGAMON PRESS, OXFORD, GB, vol. 236, 18 July 2019 (2019-07-18), XP085853045, ISSN: 0045-6535, [retrieved on 20190718], DOI: 10.1016/J.CHEMOSPHERE.2019.124400
- ELVIO D. AMATO ET AL: "A novel active-passive sampling approach for measuring time-averaged concentrations of pollutants in water", CHEMOSPHERE, vol. 209, 1 October 2018 (2018-10-01), GB, pages 363 - 372, XP055746658, ISSN: 0045-6535, DOI: 10.1016/j.chemosphere.2018.06.079

## Description

### Field of the invention

The invention relates to the field of material separation from bodies of liquid. More specifically it relates to collecting of substances, such as pollutants, from bodies of liquid such as natural waters, sewage, industrial effluents, etc.

### Background of the invention

The detection of chemical substances in water and their quantification is important in public health, industry, agriculture, farming and environmental management. Current practices for monitoring water quality have several limitations, both from a scientific and practical perspective. Over their lifetime, biota are continuously exposed to pollutants and accumulate compounds to various extents. Analysis of discrete water samples may not be an appropriate surrogate for the involved processes because it does not necessarily reflect the continuous exposure experienced by biota. In addition, this sampling approach provides total contaminant concentrations, which may not reflect the bioavailability of the substances measured. Bioavailability is regulated by several factors, including chemical speciation of the substance, temperature, organic carbon and suspended matter concentrations.

An alternative to chemical monitoring is direct sampling of resident biota as in passive biomonitoring (for example, bioaccumulation studies). This is difficult or impossible to standardize, since reference species may not be present in a given system and accumulation patterns may be very different among organisms due to differences in physiology, life stage and life history, trophic position, and ecology among others.

Document US7059206B1 shows a passive sampling device which allows *in situ* accumulation of chemical substances in water. The device offers several advantages over traditional sampling methods (i.e., discrete water sampling or biota sampling). However, data interpretation from conventional passive samplers is hampered by difficulties in estimating the thickness of the diffusion layer at the sampler/medium interface, often leading to inaccurate determinations of target analyte concentrations.

CN1 07 037 193 A discloses the preamble of claim 1.

### Summary of the invention

It is an object of embodiments of the present invention to provide a device for and method of collecting target analytes that provides a reliable estimation of concentration of target analytes in a body of liquid, and allows monitoring of the process. It is an object of embodiments of the present invention to provide support for passive dosing toxicity assessment and a method of passive dosing toxicity assessment.

In a first aspect the present invention provides a device for collecting a target analyte from a body of liquid according to claim 1, the device comprising an inlet for introducing liquid from the body of liquid into the device and an outlet for removing liquid from the device, both connected to a diffusion module which includes at least one cell for collecting target material from liquid flowing between the inlet and the outlet. A flow meter is included in the device to measure the flux of liquid within the device.

The device further comprises a communication module comprising an input for receiving signals from the flow meter and a transmitter for transmitting the signals received from the input to an external unit, for monitoring the flux of liquid through the diffusion module.

The device further comprises at least one further sensor for measuring further physicochemical parameters of the liquid wherein the device is further adapted for changing the flow rate data acquisition for optimizing flow data per unit of time as a response to the measurement of the at least one further sensor.

It is an advantage of embodiments of the present invention that analyte concentration in the liquid can be accurately calculated via diffusion models. It is a further advantage of embodiments of the present invention that the collecting process can be performed *in situ,* and it can be remotely monitored for measuring and storing flow rate data, and alternatively or optionally detecting faulty operation such as flow drop under a predetermined threshold and/or clogging.

In some embodiments of the present invention the device includes a temperature sensor for measuring the temperature of liquid flowing within the device.

It is an advantage of embodiments of the present invention that diffusion and kinetic models are improved by temperature monitoring.

In some embodiments of the present invention, the device may be adapted to provide laminar flow to allow good sampling rate, as turbulent flow affects diffusion.

In some embodiments, the diffusion module further comprises a fluidic channel comprising at least a wall and adapted to provide laminar flow, where an area of the wall opens to a pocket for holding the at least one cell comprising sorbent material, so liquid flowing in laminar flow through the channel in contact with the wall can be in contact with sorbent material in said area of the wall. It is an advantage of embodiments of the present invention that laminar flow is not hampered by the presence of sorbent material.

In some embodiments of the present invention, the cell or cells comprises a surface arranged to contact fluid in the diffusion module. The diffusion module is adapted to allow flow on an inclined plane with respect to gravity so that formation of bubbles on the surface of at least one cell is reduced. It is an advantage of embodiments of the present invention that the presence of bubbles is reduced easily, thus providing analysis of diffusion of target analytes with low error and utilizing the sorbent material with efficiency.

In some embodiments of the present invention, the diffusion module comprises a plurality of different cells adapted to simultaneously accumulate different types of target analytes. It is an advantage of embodiments of the present invention that multiple target analytes can be simultaneously sampled.

It is an advantage of embodiments of the present invention that further information on the liquid can be combined with the samples obtained from the liquid, additionally or optionally triggering the start of collecting when predetermined threshold conditions are met (such as presence of a predetermined concentration of trace metal species or oxygen in e.g. water, changes in the conductivity, etc.)

In some embodiments of the present invention the diffusion module is enclosed in a liquid-proof unit adapted to avoid ingress of liquid except through the inlet, the device being configured to introduce liquid at a predetermined depth from the surface of the body of liquid through the inlet. It is an advantage of embodiments of the present invention that collecting can be provided from a selectable depth in the body of liquid.

In some embodiments of the present invention the liquid-proof unit comprises a first compartment enclosing the diffusion module and a second compartment comprising electronics from sensors, separated from the first compartment by an impermeable barrier.

It is an advantage of embodiments of the present invention that water handling can be isolated from electronics from sensors and transmitter for their protection.

In some embodiments of the present invention the device further comprises a pump for pumping liquid through the inlet into the diffusion module, optionally wherein the pump is configured to pump a controllable flow of liquid.

It is an advantage of embodiments of the present invention that liquid flow within the device does not depend on the motion of the liquid itself in the bulk liquid, thus allowing analytes to be collected in static liquid bodies such as reservoirs or wells. It is an advantage of embodiments of the present invention that flow of liquid can be controlled in case of, for example, sediment buildup inside inlets or ducts, which would reduce sampling.

In some embodiments of the present invention the device further comprises a memory unit for temporarily storing the flow data.

It is an advantage of embodiments of the present invention that no data is lost in case of non-availability of network for transmitting data due to for example network drop or maintenance shut down.

In a further aspect, a method of collecting target analytes from a body of liquid according to claim 10 is provided. The method comprises introducing liquid into a diffusion module comprising at least one cell, collecting target material in at least one cell, removing the liquid from the diffusion module, measuring the flow of liquid through the diffusion module, sending the measurement of the flow to a communication module and transmitting the signals to an external unit, further comprising sensing physicochemical parameters of the liquid and further changing the flow rate data acquisition for optimizing flow data per unit of time as response to the sensed physicochemical parameters. The method is carried out with a device in accordance with embodiments of the first aspect of the present invention.

In some embodiments, the method further comprises monitoring the flow of fluid by monitoring the signals received on the external unit.

The method can be used in a method of performing chemical analysis of a body of liquid, e.g. water, for example for analyzing concentration of target analytes (e.g. pollutants) in the body of water.

In a further aspect, a method of performing passive dosing toxicity sensing according to claim 12 is provided

It comprises collecting samples from a liquid and flow measurement using the device of the first aspect for a predetermined period of time, subsequently performing toxicity testing using the mixture of collected analytes. It is an advantage that the toxicity assays and information obtained using the collected mixture of analytes provides information on the toxicity of the liquid with no need of testing for individual chemical compounds and combinations thereof.

In some embodiments of the present invention, performing toxicity testing comprises releasing the collected analytes into a predetermined volume of liquid initially free of pollutants. It is an advantage that the analysis of different toxicities can be controlled by separating the pollutants collected by different cells into different batches of initially pollutant-free liquid.

In some embodiments of the present invention, collecting target analytes comprises pumping liquid into the device for increasing intake of target analytes.

It is an advantage that the results of toxicity analyses can be obtained faster.

Particular and preferred aspects of the invention are set out in the accompanying independent and dependent claims.

These and other aspects of the invention will be apparent from and elucidated with reference to the embodiment(s) described hereinafter.

### Brief description of the drawings

FIG 1 illustrates the schematic device of some embodiments of the present invention.
FIG 2 illustrates a cross section of a diffusion module for use in embodiments of the present invention.
FIG 3 illustrates an exploded view of a diffusion module for use in embodiments of the present invention.
FIG 4 illustrates a cross section of a buoy device in accordance with embodiments of the present invention.
FIG 5 illustrates the schematic device of some embodiments of the present invention.
FIG 6 illustrates an exploded view of an embodiment of a buoy shell and element of the device in accordance with embodiments of the present invention
FIG 7 is a photography of the electronics part of a device in accordance with embodiments of the present invention.
FIG 8 illustrates a deployed buoy device in accordance with embodiments of the present invention.
FIG 9 is a flowchart of a method of collecting analytes from a body of water in accordance with embodiments of the present invention.
FIG 10 is a flowchart of a method of passive dosing toxicity testing in accordance with embodiments of the present invention.

The drawings are only schematic and are non-limiting. In the drawings, the size of some of the elements may be exaggerated and not drawn to scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates to analysis of bodies of liquid, in particular water bodies such as lakes, rivers, water reservoirs for industrial or human consumption. However, it can also be used for analysis of seawater, fish farms, even industrial wastewater, sewage and any other aquatic medium where chemical composition, such as pollutants, is an important factor. Thus, although in embodiments of the present invention reference will be made often to sampling of water, it can be applied to sampling of any aquatic volume, with or without biota, or in general any liquid body or volume.

Where in embodiments of the present invention reference is made to the collection of target analytes, reference is made to the separation of target analytes from the water for analysis. These target analytes may be related to pollutants, for example in the case of water quality monitoring, although other material can be analyzed (such as e.g. content of salt, essential metal species, nutrients, drugs such as illicit drugs and their metabolites, etc. In general, the range of detectable target analytes depends on the sorbents used in the sampler, thus there are many possibilities. Collecting target analytes may be done with environmental assessment purposes and/or for concentrating target analytes on a sorbent material.

Thus, the present invention does not directly relate to pollutant extraction or purification, but to sampling or pre-concentrating target analytes.

The present invention provides a solution to shortcomings of discrete sampling. Discrete sampling involves the collection of water samples at one point in time only and there is a risk of missing out events (such as sudden changes in water composition) or, on the other hand, overestimating the influence of these events. The discrete nature of such sampling does not provide a good link between the chemical composition of the sample obtained and the bioavailability.

Studies on bioaccumulation, as explained earlier, are difficult to standardize, and the magnitude of the diffusive flux of analytes towards the interface between the biota and water is highly dependent on the biological species, subspecies, external conditions, etc.

A different approach, namely passive sampling with *in situ* devices, provides a reasonable solution to these problems since it relies on the integrated accumulation of pollutants over time. It can be viewed as a surrogate for bioaccumulation. However, passive samplers have the advantage that they can be standardized and configured in such a way that a broad range of pollutants is measured, for example by using passive sampling cells that are selective for certain classes of substances. Analogous to the factors that influence biouptake, the accumulation of substances in the passive sampler sorbents is also sensitive to the environmental conditions and chemical speciation of the substances.

Target analytes are collected from the flow of liquid on passive sampling cells, which are later analyzed, for example in an analysis center such as a laboratory. This solves the problem of over or underestimating the influence of changes in the chemical composition of the liquid. It also gives reliable information on the concentration and chemical speciation of the target analytes found and their bioavailability. In the following, "passive sampling cell" will be referred to simply as "cell".

Nevertheless, implementation of conventional passive sampling is hampered by its sensitivity to hydrodynamic flow conditions in the water body, which strongly affects the uptake rate of passive devices. In other words, the results of classical passive sampling are heavily dependent on the flow of the water and its variability, which governs the thickness of the diffusion layer in solution at the sorbent/medium interface and thus the magnitude of the diffusive flux of the target analytes (such as pollutants) towards the passive sampler. For example, in quiescent ponds there is virtually no flow, so the diffusive flux of target analytes is different compared to that in rivers characterized by higher flow rates.

Changes in the flow rate in continuous sampling devices may also happen, due for example to fouling or the like, and this information is lost in the analysis. The analysis may reflect sampling at a changing flow rate due to slow build up and clogging of the ducts used to drive fluid to the samplers.

The lack of flow control also brings a problem at the level of data analysis. As the flux is not known, back-calculation toward target analyte concentration would require a complex setup such as parallel flow measurements, calibration in the field or laboratory, etc. Additionally, the operational time-scale of the devices are usually far from those experienced by many aquatic organisms.

Moreover, in order to perform quantitative interpretation of conventional passive sampling data, it is necessary to apply special measures to regulate the uptake of material by manipulating the thickness of the diffusion layer. These measures include application of hydrogels or microporous material at the interface between the liquid and the sampler. Additionally, performance reference compounds (PRCs) may be used to obtain quantitative data, however, the application of this approach is limited to substances for which accumulation and dissipation processes are regulated by the same kinetic constants, which is not the case for sorbents commonly used for the accumulation of polar organic compounds.

The present invention proposes an active-passive approach to sampling, by providing active features to a passive device. It also provides a sample concentrator, so the analytes are pre-concentrated in the sorbents. This means that the concentration of the analytes within the sorbent material becomes greater than their concentration in the body of liquid.

During deployment, the device "samples" target analytes from a water body by "preconcentrating" them in a sorbent phase or material. At the end of the deployment time, the sorbents can be (i) extracted to completely release the analytes which are subsequently quantified; the sorbent extracts can also be used to dose/spike exposure media in toxicity tests, or (ii) the sorbent with its analyte loadings can be placed in an exposure medium to provide a "passive dosing" in toxicity tests; the analytes will be released from the sorbent into the exposure medium at a rate depending on the physicochemical properties of the sorbent and the analytes, and the composition of the surrounding medium. During the deployment, the flow is measured and optionally controlled, in order to improve the accuracy of the calculation of target analytes in the body of liquid from the preconcentrated target analytes.

In a first aspect of the present invention, the target analyte collecting device comprises a diffusion module. The diffusion module is adapted to allow liquid flow within the module. The diffusion module is further fitted with a flow meter to measure liquid flow rates within the module, for example but not limited to measure flow rates of liquid leaving the module. Optionally a pump may be used to introduce liquid into the module.

One or more receiving phases in the form of cells, such as the ones traditionally used in passive sampling devices, are incorporated in the diffusion module to collect target analytes present in the liquid. In some embodiments of the present invention, the module includes multiple cells adapted to collect different types of target analytes, which would allow the simultaneous accumulation of different target analytes.

In some embodiments of the present invention, the diffusion module is adapted to provide a laminar flow of the liquid, allowing contact between the liquid and the cells. This advantageously controls the magnitude of the diffusive flux and hence the sampling rate. Otherwise under turbulent flow, sampling rate would be highly variable.

For the monitoring, the collecting device may include a transmitter for sending the measurements of the flow meter to a remote receiver, for example a monitorization center.

The collecting device of embodiments of the present invention offers several advantages, such as providing well-controlled flow rate over the samplers. This renders the measurements independent of flow in the test medium. It further enables quantification without the need for expensive PRCs typically used to assist with the interpretation of passive sampling measurements.

The flow within the diffusion module can be accurately controlled and monitored. The target analytes can be extracted from the cell, analyzed and quantified. The control of the flow rate allows a good control of the diffusion layer thickness at the sorbent/medium interface in the cell. When the device is run in dynamic mode (see below) the diffusion layer thickness, together with knowledge on the diffusion coefficients of the analytes, facilitates establishment of a link between the concentration of target analytes in the cell and their concentration in the bulk liquid.

More in detail, a controlled flow of liquid from a bulk body of liquid, e.g. a bulk aqueous medium, results in establishment of a constant steady-state diffusion layer thickness in solution at the sorbent/solution interface, which is not affected by variations in the hydrodynamic flow in the bulk aqueous medium. This feature is advantageous for the interpretation of the chemical speciation in the bulk aqueous medium, as the interpretation should consider both diffusive and kinetic fluxes for proper and complete analysis. Variation of the flow rate results in the variation in the diffusion layer thickness. As the type of the target analyte and the flow rate affect diffusion, controlled manipulation of the flow rate can provide very useful information. For example, changing the flow in a controlled manner allows probing the kinetic chemical speciation features. Measurements over a wide range of flow rates allows in practice a controlled manipulation of the timescale of the process. This can be used for subsequent interpretation of the data, and translation to e.g. predictions of bioavailability, etc.

The device can be adapted to run in dynamic mode or run until equilibrium partitioning is attained. The dynamic regime applies as long as the deployment time remains (i) greater than the initial transient time required to establish the steady-state flux, and (ii) much less than the time required to attain partition equilibrium. Once partition equilibrium is attained, by definition, there is no net flux. If the device is run until partition equilibrium is attained between the sorbent and the body of liquid (e.g. bulk aqueous medium), then the analyte concentration in the sorbent corresponds to the "sorbent-reactive" form(s) of the analyte, e.g. the free metal ion, or the protonated form of an organic compound. These two operational modes facilitate use of the present invention for predictions of bioavailability. The connection between the dynamic and equilibrium modes of the device and predictions of bioavailability also requires specification of the biouptake flux. The relevant consideration is the relative magnitude of the biouptake flux versus the unsupported diffusive supply flux of the bioreactive form of the analyte.

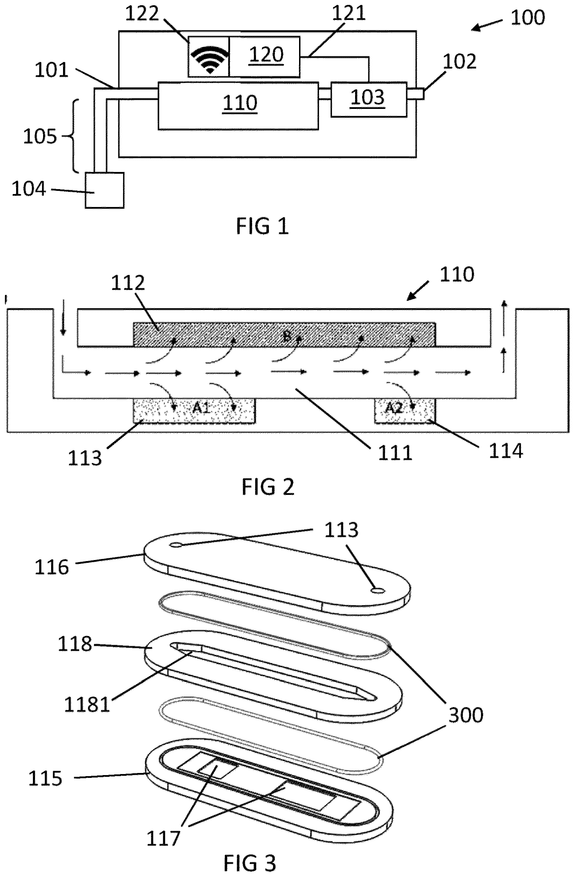

FIG 1 shows a device 100 with an inlet 101 and outlet 102 to respectively allow the ingress and egress of water (or other liquid) present in a volume thereof into and out of the device 100. In the particular embodiment of FIG 1; a flow meter 103 provides measurement of the flux through the outlet, thus providing measurement of liquid leaving the device. A pumping device 104 ensures that the direction of the flow from inlet to outlet is not reversed. The pumping device can pump within a range between a few milliliters per second and a few tens of milliliters per second. For example, the pump can deliver at least 4.6 ml/s, for example between 4.6 ml/s and 8.4 ml/s, and for example up to 33.5 ml/s. The inlet may be connected to the pump via a duct 105 with a length that can be regulated and chosen depending of the depth at which the sampling is desired.

However, the presence of a duct 105 is optional. The device may be for example floating on the surface of the liquid, being partially submerged or submerged close to the surface for sampling liquid close to the surface. However, preferably the device includes a floating part enclosing and protecting the diffusion module and any electronic and / or sensors, the device further including the duct 105 for introducing liquid at a predetermined distance from the surface of the body of liquid. The distance and thus the length of the duct depends on the application of the device. For example, the length of the duct 105 may be adapted so the device can sample water at a depth between 1 meter and 3 meters from the surface of the body of liquid.

The flow of liquid is provided through a diffusion module 110 for collecting target analytes. The liquid is evacuated from the diffusion module back to the outside volume of liquid through the outlet 102. The flow meter 103 obtains information related to the flux of liquid leaving the diffusion module 110.

This information and measurements from the flow meter are sent to a communication unit 120 which includes an input 121 for receiving said measurements and information from the flow meter 103. The communication unit 120 is configured to send this information to an external unit, for example a database. The communication unit includes a transmitter 122 which can reliably transmit information, for example via an information telecommunication network such as e.g. Sigfox.

The data may be timestamped, so variations of flux can be identified along a predetermined period of time. Moreover, the communication with the external unit allows monitoring the process and detect any malfunction, clogging or the like, which results in an unexpected change of flow rate. For example, a change of flow rate outside a predetermined upper and lower threshold may indicate an obturation or presence of leakage, or a flux outside a predetermined range may indicate clogging by sediment buildup or other malfunctions.

FIG 2 shows a cross section of a diffusion module 110 of an embodiment of the present invention. Liquid is received from the inlet 101 into a fluidic channel 111, which is defined by at least one wall (e.g. cylindrical channels). Liquid is evacuated to the outlet 102 of the device, as shown in FIG 1. In some embodiments, the fluidic channel 111 is adapted to force the liquid into laminar flow. For example, the geometry of the channel may be configured for this; for example the channel may be defined by a volume (e.g. rectangular prism) where two of its dimensions (width, length) are much larger than the third dimension (height) so the liquid is forced to flow horizontally with respect to gravity in a planar way. Other methods of providing laminar flow may be used, e.g. other shapes.

The present invention may comprise a diffusion module with at least one passive sampling cell, e.g. several cells, comprising material prepared to collect target analytes, e.g. at least one type thereof, from liquid in contact with the cell. For example the material may allow diffusion of the analyte, for example it may be absorbent material, preferably without disturbing the liquid flow, e.g. the laminar flow. At least one cell, for example each cell, is disposed so contact between the liquid and the material is promoted, to allow diffusion of target analytes from the surface exposed to the channel into the bulk material of the cell. For example at least one cell may be a tablet where only one surface is exposed to the liquid, e.g. the surface of the cell may define part of the surface of the fluidic channel wall(s).

The particular example of FIG 2 shows a diffusion module 110 including three cells 112, 113, 114 disposed along the fluid channel walls, but less or more cells may be used. Preferably, each cell may be adapted to collect one main type of target analyte, e.g. the cell materials and shape may be chosen to optimize collection of one type of target analyte. For example, the cells may comprise Chelex resin, Oasis HLB, and silicone rubber, for simultaneously accumulating cationic metals, polar, and non-polar organic compounds, respectively. An exemplary device including these cells shows strong agreement between APS and time-averaged total concentrations measured in discrete water samples for most of the substances investigated. Accuracies for metals range between 87 and 116%, except Cu and Pb (~50%), whilst accuracies between 64 and 101%, and 92 and 151% were achieved for polar and non-polar organic compounds for artificial fresh water, respectively. These accuracies refer to the combined results from all the experiments performed at the flow rates (mL/s) of F1 = 4.7; F2 = 6.9; F3 = 9.2; F4 = 4.6; F5 = 5.6; F6 = 7.7; F7 = 8.4. These flow rates cover the operational range of the pump integrated in the APS device (measured at the outlet), and were electronically monitored every 10 min.

FIG 3 shows an exploded view of a diffusion module 110 including a bottom part 115 and a cover part 116. The bottom part 115 shows two gaps 117 on its surface which fit sorbent material for providing the cells. The cover part 116 may include also a gap (not shown). A spacing part 118 with a shaped orifice 1181 which, combined with the cover and bottom parts 115, 116, provides the shape of the fluidic channel 111. This shape may be adapted to provide laminar flow, for example a channel with two dimensions (e.g. width and length) much larger than the third dimension (e.g. height). The structure includes two sealing bands 300, to prevent leakage. Two holes 119 on the cover part 116 provide entry and exit of liquid to the diffusion module. Other geometries may be used, for example a hole on the cover part for entry of liquid and a hole on the bottom part 115 for evacuation of the liquid after being in contact with the cells, etc. Further, the diffusion module may be adapted to be fitted with sensors or the like. The diffusion module may include other features such as holding means to fix in a device of the present invention.

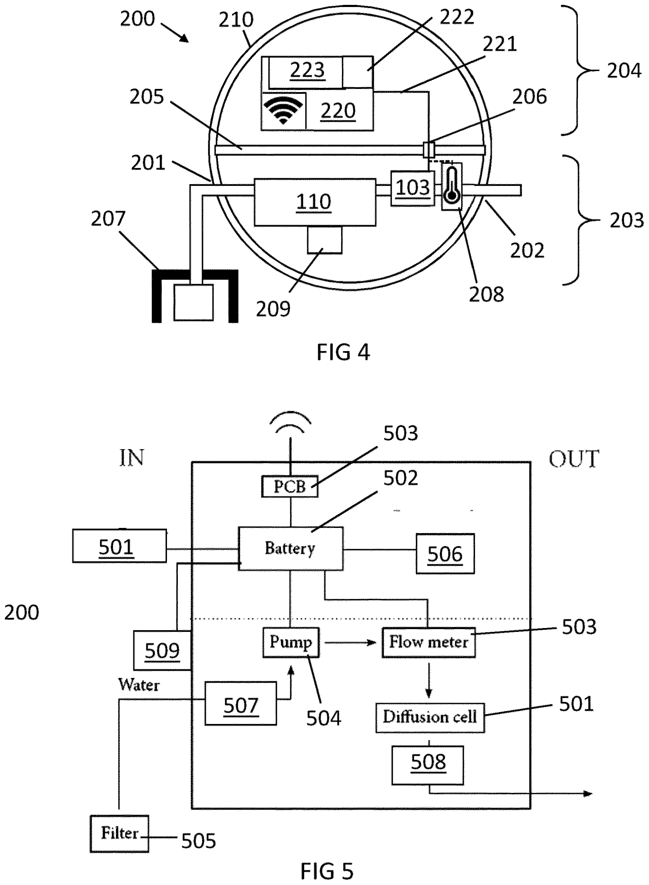

FIG 4 shows a cross section of a device in accordance with embodiments of the present invention implemented as a floating device 200, e.g. including a buoy comprising a floating shell 210 which is sealed to avoid liquid leakage inside the device, and allows entry of liquid only through the inlet 201, preferably it allows liquid exchange with the exterior only through the inlet 201 and outlet 202.

The buoy may include two separate isolated parts 203, 204, for example chambers including respectively the communication device 220 and the elements in direct contact with liquid (inlet and outlet, diffusion module, flow sensor). The parts may be separated by an impermeable barrier 205 which does not allow liquid exchange between the two isolated parts. However, data transmission is allowed between the two parts 203, 204. At least data from the flow meter 103 can be transmitted from the part 203 or chamber holding the flow meter and the part 204 or chamber holding the communication device 220. For example, a wireless transmission can be provided, preferably the transmission is wired to the input 221 of the communication device 220. The wired transmission may be disposed through the impermeable barrier 205 without effectively compromising the impermeability of the barrier, through a suitable connector 206 as known in the art.

In some embodiments of the present invention, the device may be equipped with a GPS localizer 222 (for example on the electronics part 204, for example as part of the communication unit 220, the present invention not being limited thereto) so the device can be accurately tracked down and localized for cell retrieval, even if partially or totally submerged.

In embodiments of the present invention, for example but not limited to the embodiment of FIG 4, the communication unit 220 of the device may include a memory unit 223 for storing, e.g. temporarily storing, data exchanged between the communication device and at least the flow meter. For example, at least the flow data obtained from the flow meter 103 can be stored in the memory unit 223. This can be done as a backup security copy, or only when a network data drop is detected, for example during periods in which data transmission is hampered for any reason (network maintenance shut down, etc). This avoids data loss in case of non-availability of network. Once the network recovers functionality, the communication device 220 can be programmed to access the memory unit 223 and send the data obtained during the period with no network. Alternatively the data can be obtained directly from the memory unit 223 together with the device and diffusion module 110.

In some embodiments of the present invention, the pump 104 or the inlet 101, 201 may be equipped with a pre-filter to reduce clogging and fouling. Additionally, the device 200 may be equipped with a light shield 207, for example to shield the pump 104 or the pre-filter therein from light. This advantageously may reduce fouling due to algal growth and other particles, for example in biologically rich liquid environments (ponds, lakes and the like).

The present invention allows control of sampling activity, as well as concentrating target analytes. Additionally, the present invention allows time integrated sampling. This means that even short term events, such as short term pollution events, are recorded with no risk of missing the event or of overestimating their influence. The present invention further reflects bioavailability and hence the true exposure of organisms.

The presence of the flow meter allows accurate record of flow rate, hence it is possible to perform back-calculation to obtain the concentration of the target analytes in the bulk liquid based on the diffusion coefficient D of the analyte and the measurement of the flow.

Embodiments of the present invention allow pump control. Pump control can be used to increase flow if the inlet becomes clogged, or to reduce liquid intake to keep a static flow. The pump may allow to adjust the volumetric flow rate (volume per unit time) of liquid entering the device. However, the residence time of the liquid on the cell also contributes to the sampling, as some analytes require slower flow to be trapped in sorbent material. The ability to change the flow in a well-controlled manner is a very powerful way to probe the kinetic chemical speciation features. Measurements over a wide range of timescales (flow rates) allow a robust subsequent interpretation of the data as well as translation to e.g. predictions of bioavailability etc. Thus, not only the present invention allows remote data retrieval of the collection and accumulation status, but also remote control of the collection process.

In some embodiments, there may be a feedback control, where the flow can be controlled (for example, by controlling the pump duty cycle) and increased or reduced automatically if required by the device upon detecting a change of the flow rate measured by the flow meter. For example, if the flow increases over a predetermined threshold, or decreases under a bottom threshold, the device may be adapted to reduce or respectively increase the pumping action.

In some embodiments, a further sensor or sensors 208, 209 are provided to track target collection, for example to track sampling conditions. This information can be used to improve diffusion analysis to obtain accurate concentration measurements. For example, a temperature sensor 208 can give information that is relevant for considerations of bioavailability, and more importantly, temperature information for the diffusion models. Other sensors such chemical sensors 209 can also give information that is relevant for considerations of bioavailability. For example, sensors for detecting bio-elements can be used, e.g. oxygen sensors and/or pH sensors can be included. The data collected by the one or more further sensors can be sent also wirelessly.

The presence of additional sensors has the further advantage that, for a chemical sensor 209 which measures pH or oxygen or the like, a signal can be provided which allows provision of information on the physicochemical status of the body of liquid, as well as controlled operation in function of said status. For example, the signal may indicate a sudden change of the water quality (for example shown as a sudden change in pH or oxygen content), which may prompt a change in the operational status of the device, e.g. it may start collecting flow rate data more often, or may change the status of the pump for optimizing selectivity of predetermined target analytes, or the like. The data can also be sent to a remote unit wirelessly, which may give a signal that a sudden change took place (for example, as a warning sign that a spillage may have occurred). Data can optionally also be stored in a memory unit, either continuously or when a network problem is detected, analogously as with the measurements of the flow meter.

A schematic diagram of an embodiment of the present invention is shown in FIG 5 which includes an "IN" side for introducing water and energy to power the devices, and an "OUT" side for removing water after being run through the diffusion module. On the "IN" side, an energy harvesting device 501 (e.g. solar panels or the like) is used to load a battery 502 for powering the electric components and circuitry 522, for example a printed circuit board (PCB), which may include the communication module. The lines show that the battery powers the pump, flow meter, etc., however the line showing signal transfer and input information lines are not shown in this figure, but in FIG 1. The energy harvesting device is optional, for example in devices with relatively short deployment time. The pump 504 is included within the device, pumping water from the inlet through the filter 509. The flux of pumped water is measured with the flow meter 503 before entering in the diffusion cell 510, instead of at the outlet of the device as in FIG 1 and FIG 4.

Several further sensors can be included in the device. For example, a temperature sensor 507, 508 can be placed to measure the temperature of the water within the circulation system which includes channels, e.g. tubing providing fluidic connection between the different elements of the device. For example, a sensor 507 may be placed so as to measure the temperature of the body of water, e.g. it may be placed at the inlet, which can be considered the same as the temperature of the body of water. Another sensor 508 can be placed to measure the temperature of the water exiting the diffusion cell before being removed from the device. The information of the temperature can be used for the back-calculation of concentration, in the diffusion analysis. Using two temperature sensors at different parts of the circulation system has the advantage that any change of temperature, e.g. heat generation, in the device can be measured.

In some embodiments, pH, oxygen and/or other sensors 509 that monitor quality may be situated outside of the circulation system. For example, they may be chemical sensors. These may provide measurements even when the pump 504 is not working. For example, the sensor or sensors 509 may be placed in direct contact with the body of liquid, e.g. at the outside. For example, content of oxygen or presence of trace metal species may be important biological factors that can be detected and measured with such sensors.

A temperature and/or a humidity sensor 506 can be added to the region of the device containing the electronics. The measurements of the sensors are sent to the circuitry 503 and transmitted for subsequent analysis. The signals related to the temperature and/or humidity of the electronics region can be monitored periodically or continuously to check that no overheating takes place, or to check that the impermeable barrier 505 has not suffered leakage. An alarm signal can be generated (either in the circuitry 503 or in the remote external receiving unit) if any of the measurements of the temperature of the electronics or the air of the region, and/or the humidity of the air in the region, surpasses a predetermined threshold.

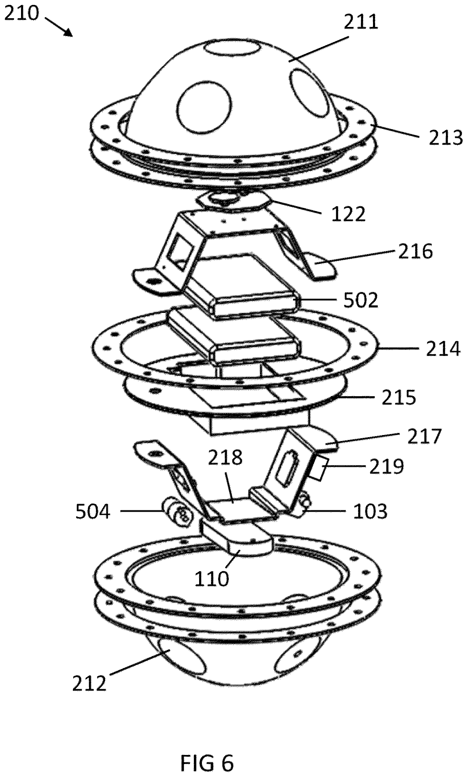

FIG 6 shows parts of the device including a shell 210. The shell 210 may be made of inexpensive materials such as polymeric materials. The material may be suitable for the particular application of the device. For example, where the device is being used in an aqueous environment (a pond, water reservoir, etc.) the polymer may be suitable for such environment, e.g. acrylonitrile butadiene styrene (ABS). The shell may be provided by vacuum-forming, for example in two halves 211, 212 that can be fitted together. The shell may further comprise other elements, such as two holding rings 213, e.g. stainless steel rings, and a sealing ring 214, e.g. an EPDM rubber ring, all being held together by screws. Further or alternative elements can be used, e.g. threads to connect the parts, and the like.

The device may include a plate 215 which can combine with the sealing ring 214 to form the impermeable barrier 205 shown in FIG 4 (the present invention not being limited thereto). The plate 215 may act as a support for some of the elements of the device, such as the battery and/or communication module and/or memory unit. The particular embodiment of FIG 6 includes a holder 216 attached to the plate 215 for providing support to at least part of the circuit, for example the transmitter 122, of the electronics region. Analogously, in the fluidic region (lower part of the device), the diffusion module 110 may be fixed to the support plate 215. For example, a holder 217 attached to the plate 215 may be provided, and the diffusion module 110 may be attached to it. Other devices, e.g. the pump 504, and/or the flow meter 103 may be attached to the holder 217.

The device may be adapted to provide a flow which reduces the chance of bubble formation, thus allowing a homogeneous flow, especially on the liquid-receiving surfaces of the cells in the diffusion module. For example, the channel of the diffusion module may be sloped (thus, not completely perpendicular with respect to the gravity). For example, the whole diffusion module may be mounted over an inclined holder, for example the holder 217 provided within the shell 210. The holder 217 shows an inclined surface 218 to which the diffusion module 110 can be attached for providing inclined flow within the module. Alternatively or additionally, reduced bubble formation can be provided by a vibrator, for example a vibrator 219 added to the diffusion module or to the holder.

The angle of inclination and the vibration provided to the device can be adjusted to reduce the formation of bubbles on the cell, depending on the type of liquid and the interaction with the sorbent material of the cell. For example, the inclination may be between 5° and 45°

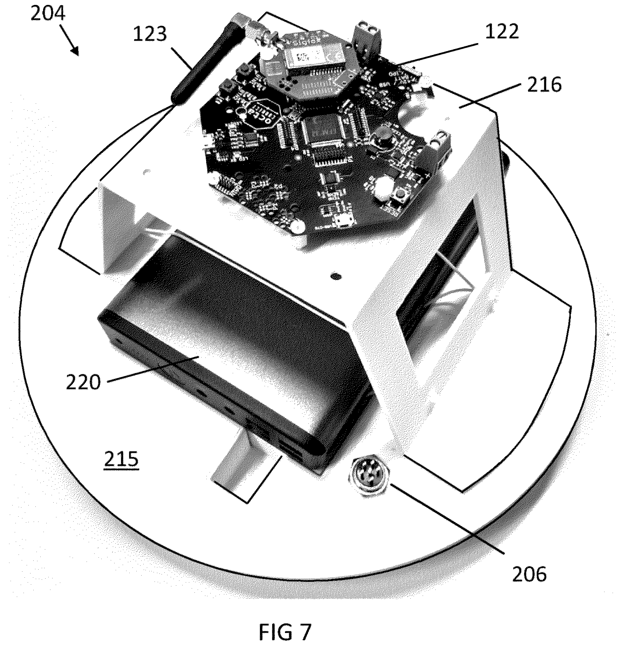

FIG 7 is a photograph of the electronics part 204 of a device in accordance with embodiments of the present invention. The communication module 220 is shown on a recess provided on the impermeable barrier (e.g. on the support plate 205), thus providing a compact device. The connector 206 is also shown. The holder 216 holds the transmitter 122 including an antenna 123.

In a further aspect, a kit of parts is provided, including the device of embodiments of the first aspect of the present invention. The device of the first aspect of the present invention may be a modular device which can be provided as a kit of parts, for example as a floating buoy and as further elements, which can be transported easily to a deploy area, assembled and deployed in an easy way.

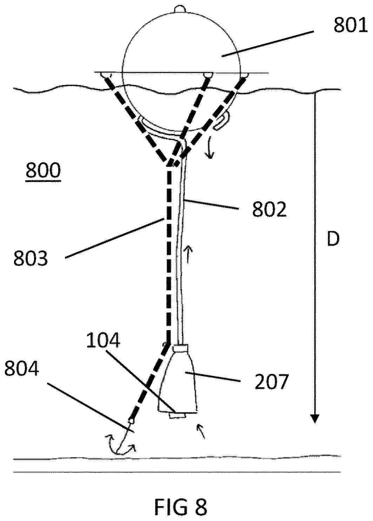

FIG 8 shows a device assembled from the kit of parts and deployed on a body of liquid, e.g. a water body 800. The kit of parts includes a diffusion module 110 which can be in fluidic communication with a flow meter 103, and a communication module 120 with an input for receiving signals for the flow meter as well as a transmitter 122 for transmitting measurements of the flow to an external unit. These elements may be included in a shell, comprising an inlet and outlet, and other elements such as holders for the diffusion module, cells, an impermeable barrier, optional vibrator, powering units such as batteries and the like. These elements may form a floating buoy 801.

The kit of parts may comprise further elements, such as a channel, tube or hose 803 connectable to the input of the shell of the buoy 801. It may also comprise a pump 104, e.g. a controllable pump, optionally covered by a light shield 207 and/or comprising a filter for reducing fouling. The pump 104 is deployed at a predetermined depth D of the body of liquid, so liquid from that predetermined depth of liquid is sampled or concentrated, as the composition of the liquid usually varies with the depth. The kit may further comprise attachments 803 and weights 804 to fix the position of the floating shell and to fix the depth of the pump (e.g. anchoring weights, ropes, chains and the like).

In a further aspect, the present invention comprises a method of collecting target analytes from a body of liquid. A device in accordance with embodiments of the first aspect can be used to carry out the steps of the method.

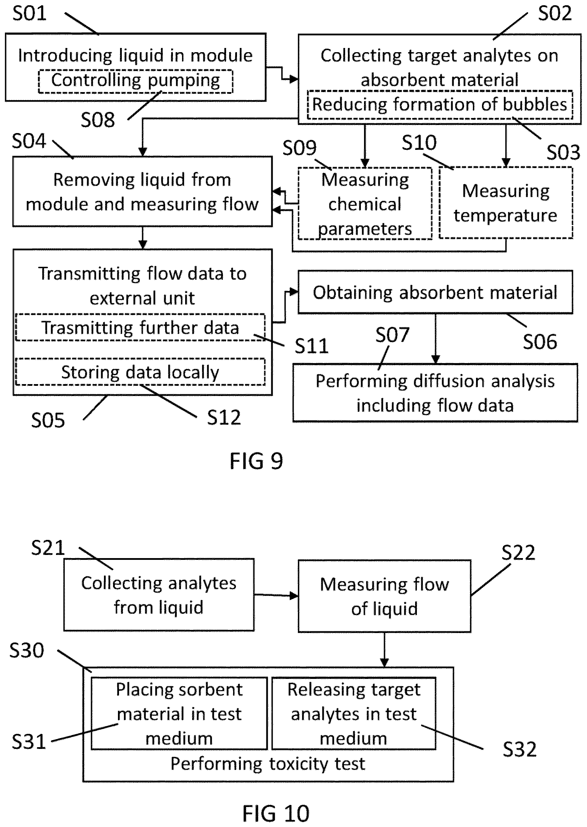

The method, as shown in FIG 9 includes introducing S01 liquid into a diffusion module comprising at least one cell and collecting S02 (e.g. sampling or concentrating) target analytes from a liquid in the body of liquid (such as a water reservoir, pond, lake...) in sorbent material of a cell disposed along the diffusion cell. This can be done by running the liquid under laminar flow conditions. Optionally this can be done under inclined flow and/or vibration, thus reducing S03 possible formation of bubbles.

The method comprises removing the liquid from the diffusion module while measuring S04 the flow of liquid removed from the diffusion module, thus obtaining the flow rate of the liquid removed. For example, the flow rate can be obtained from the outlet which returns the liquid from the diffusion module back into the body of liquid. The measurement data of the flow is then sent to a communication module and transmitted S05, preferably wirelessly, to an external unit.

This collection method can be used for chemical analysis of the body of water. It is possible to predict how the flow in the diffusion module affects the concentration of target analytes. The measurement of the flow and possible control thereof allows to calculate the concentration of target analytes in the body of water from the preconcentrated target analytes in the sorbent material of the cell.

When target analytes have been collected in at least one cell, after a predetermined period of time, part or all of the sorbent material of the cell, e.g. the whole cell, is obtained S06 from the diffusion module. Subsequently, chemical speciation analyses are performed S07 by combining the analysis of target analytes accumulated in the absorbent material of the cell and the flow data retrieved remotely.

Monitoring the flow and flow rate remotely allows detecting any change of flow, possibly requiring intervention, e.g. changing the frequency of measurements, controlling the flow, etc. For example, the flow or the frequency of measurements can be increased, so sampling is enhanced and the flow data is more detailed (more data per unit of time) to track better changes, upon detecting a change in the flow, for example a sudden change or a reduction of flow under a threshold, which may indicate clogging.

The method may comprise controlling S08 the liquid ingress into the diffusion module while introducing S01 the liquid into the diffusion module, e.g. by controlling pumping of liquid from the body of liquid into the diffusion module, for example for improving analysis of one type of analyte, upon detecting clogging, etc.

Control of flow can be used, as explained before, in analysis of kinetic chemical speciation features.

In some embodiments of the present invention, other parameters of the liquid are monitorized, in order to improve diffusion data analysis and concentration analysis. For example, for improving bioavailability analysis and pollution analysis in water, pH and/or oxygen content in the water flow can be measured S09. Temperature data can also be obtained S10, for improving diffusion models for diffusion analysis and concentration calculation.

Data from the other optional sensors be transmitted S11 to an external unit. Data from the flow meter and optional sensors can optionally be stored S12 on a memory unit locally, temporarily or as a backup copy, either continuously or when transmission is difficult or slow.

The device can be also used as a concentrator, so cells of the diffusion module concentrate target analytes.

In a further aspect, the present invention allows performing toxicity testing. This can also be performed with the device of the first aspect of the present invention. In particular, the sorbents can be used for passive dosing. This allows model organisms to be exposed to the real mix of pollutants present in the body of liquid (e.g. water). Target analytes are collected by absorbent material on a diffusion module while registering flow and, optionally, temperature and other parameters as mentioned above. In particular, a method of performing passive dosing toxicity sensing comprising collecting target analytes from a liquid in the sorbent material of at least one cell while collecting flow measurement data using the device of any one of the previous claims for a predetermined period of time, subsequently extracting at least one cell and performing toxicity testing on the extract.

FIG 10 shows a flowchart of the method for performing toxicity testing, in particular passive dosing toxicity testing. The method includes collecting S21 analytes from a body of liquid, usually a waterbody. This is done while measuring S22 flow, and remotely monitoring said flow, of the liquid through the device containing the cells. For example, a device in accordance with embodiments of the first aspect of the present invention can be used. Afterwards the sorbents (which absorbed pollutants) are used, not for chemical analysis, but as a dosing vector to perform S30 (eco)toxicological tests. In passive dosing, the sorbents release the pollutants they absorbed. In some embodiments, model organisms in the tests will be exposed to the true mixture of contaminants absorbed from the waterbody. This allows a representative and controlled assessment of toxicity.

Thus, the toxicity assays can be conducted using exposure media which reflect the target analyte composition of the bulk water body without the need for testing individual chemical compounds and arbitrary combinations thereof. Information on toxicity can thereby be obtained easily with no need for complex procedures to isolate separate compounds. This is advantageous because often it is the given combination of compounds and relative concentrations thereof, rather than the mere presence of a given compound, that is the relevant driver of toxicity in liquids such water.

The method includes releasing S31 the target analytes into test media, e.g. a predetermined volume of liquid initially free of pollutants. For example, the sorbent material can be used as a passive dosing system. The sorbent material is placed S32 in a toxicology test medium, and the collected compounds and other target analytes are released over time. Alternatively, the target analytes may be extracted from the sorbent material of the cell and the extracted analytes then used to perform toxicity tests.

The analysis of different toxicities could be controlled by separating the pollutants of different cells into different batches of pollutant-free liquid, however this is not necessary and all the target analytes may be analyzed in the same test.

In passive dosing toxicity testing, the chemicals accumulated on the sorbent are released once the sorbent material (or a portion of it) of a cell is placed in a test vessel containing, for example, clean water. Organisms are then introduced into the vessel to perform a toxicity test. They are exposed to a mixture of contaminants, which reflects the composition (qualitatively and quantitatively) found in the field.

In some embodiments, partition equilibrium between the sorbent and the bulk aqueous medium in the field is attained before removing the sorbent, as the amount of chemical accumulated on the sorbent depends also on the exposure time, and not only on the concentration in water. At partition equilibrium, the accumulated amount is no longer time-dependent. This means that at partition equilibrium, the amount of substances accumulated in the sorbent reflects their concentration in the bulk liquid and their respective sorbent/liquid partitioning coefficients.

It can be assumed that the sorbent in the test vessel should reach equilibrium with the water before starting the toxicity test. This would represent only the concentration of the sorbent-reactive form of the contaminant.

The advantage of monitoring the flow for post-deployment passive dosing toxicity testing is that, so long as diffusion in the liquid phase is overall rate limiting and chemical kinetics do not play a role, the faster the flow, the faster the accumulation of the analyte on the sorbent. If the flow within the diffusion cell is greater than that in the bulk water body, the accumulation process will be faster than in the absence of an imposed flow. For instance, for a simple case in which chemical kinetics can be neglected, if under natural conditions the necessary amount of analyte in the sorbent material would be achieved in 2 months, by using a flow that is twice as fast in the diffusion cell, it is possible to achieve the desired amount of analyte in 1 month. Measuring the flow (e.g. the imposed flow and the hydrodynamic flow in the body of liquid) allows estimation of how fast the uptake in the device is compared to simply exposing the sorbent in the water body.

In some embodiments, flow measurement can be done without pumping to obtain the natural flow, so pumping can be optimized taking into account the flow measurements and the required time to sample and/or concentrate the target analytes in the device.

The method allows collecting analytes by pumping liquid into the device for increasing intake of target analytes. Thus, the results of toxicity tests can be obtained faster, as accumulation can also be done faster.

## Claims

1. A device (100) for collecting a target analyte from a body of liquid, the device comprising
- an inlet (101) for introducing liquid from the body of liquid into the device and an outlet (102) for removing liquid from the device,
- a diffusion module (110) connected to the inlet and to the outlet and further comprising at least one cell for collecting the target analyte from liquid flowing between the inlet and the outlet, and
- a flow meter (103) adapted to measure the flux of liquid within the device, wherein the device further comprises a communication module (120) comprising an input (121) for receiving signals from the flow meter (103) and a transmitter (122) for transmitting the signals received from the input to an external unit, for monitoring the flux of liquid through the diffusion module,
further comprising at least one further sensor for measuring physicochemical parameters of the liquid,
**characterized in that** the device is further adapted for changing the flow rate data acquisition for optimizing flow data per unit of time as a response to the measurement of the at least one further sensor.

2. The device of the previous claim further comprising a temperature sensor (208) for measuring the temperature of liquid flowing within the device.

3. The device of any one of the previous claims wherein the diffusion module further comprises a fluidic channel comprising at least a wall, the fluidic channel adapted to provide laminar flow, where an area of the wall opens to a pocket for holding the at least one cell comprising sorbent material, so liquid flowing in laminar flow through the channel in contact with the wall can be in contact with sorbent material in said area of the wall.

4. The device of any one of the previous claims wherein the at least one cell comprises a surface arranged to contact fluid in the diffusion module and that the diffusion module is adapted to allow flow on an inclined plane with respect to gravity so that formation of bubbles on the surface of at least one cell is reduced.

5. The device of any one of the previous claims wherein the diffusion module comprises a plurality of different cells adapted to simultaneously accumulate different types of target analytes.

6. The device of any one of the previous claims wherein the diffusion module is enclosed in a liquid-proof unit adapted to avoid ingress of liquid except through the inlet, the device being configured to introduce liquid at a predetermined depth from the surface of the body of liquid through the inlet.

7. The device of the previous claim, wherein the liquid-proof unit comprises a first compartment enclosing the diffusion module and a second compartment comprising electronics from sensors, separated from the first compartment by an impermeable barrier.

8. The device of any one of the previous claims, further comprising a pump (104) for pumping liquid through the inlet (101) into the diffusion module (110), optionally wherein the pump is configured to pump a controllable flux of liquid.

9. The device of any one of the previous claims, further comprising a memory unit for temporarily storing the flux data.

10. A method of collecting target analytes from a body of liquid comprising introducing liquid into the diffusion module of a device as in any one of the previous claims, collecting target material in at least one cell, removing the liquid from the diffusion module, measuring the flow of liquid through the diffusion module, sending the measurement of the flow to a communication module and transmitting the signals to an external unit, further comprising sensing physicochemical parameters of the liquid and further changing the flow rate data acquisition for optimizing flow data per unit of time as response to the sensed physicochemical parameters.

11. The method of the previous claim further comprising monitoring the flow of fluid by monitoring the signals received on the external unit.

12. A method of performing passive dosing toxicity sensing comprising collecting samples from a liquid and flow measurement using the device of any one of the previous claims 1 to 9 for a predetermined period of time, subsequently performing toxicity testing on the cell.

13. The method of the previous claim wherein performing toxicity testing comprises releasing the samples into a predetermined volume of liquid initially free of pollutants.

14. The method of the previous claim 12 or 13 wherein collecting target analytes comprising pumping liquid into the device for increasing intake of target analytes.

## Patentansprüche

1. Eine Vorrichtung (100) zum Sammeln eines Zielanalyts aus einem Flüssigkeitskörper, wobei die Vorrichtung umfasst
- einen Einlass (101) zum Einleiten von Flüssigkeit aus dem Flüssigkeitskörper in die Vorrichtung und einen Auslass (102) zum Ausbringen von Flüssigkeit aus der Vorrichtung,
- ein Diffusionsmodul (110), das mit dem Einlass und mit dem Auslass verbunden ist, und weiter mindestens eine Zelle zum Sammeln des Zielanalyts aus der Flüssigkeit umfasst, die zwischen dem Einlass und dem Auslass fließt, und
- einen Durchflussmesser (103), der angepasst ist, um den Flüssigkeitsfluss innerhalb der Vorrichtung zu messen,
wobei die Vorrichtung weiter ein Kommunikationsmodul (120) umfasst, das einen Einlass (121) zum Empfangen von Signalen von dem Durchflussmesser (103) und einen Sender (122) zum Senden der vom Einlass empfangenen Signale an eine externe Einheit zum Überwachen des Flüssigkeitsflusses durch das Diffusionsmodul hindurch umfasst,
weiter umfassend mindestens einen weiteren Sensor zum Messen physikalisch-chemischer Parameter der Flüssigkeit,
**dadurch gekennzeichnet, dass** die Vorrichtung weiter zum Ändern der Flussraten-Datenerfassung zum Optimieren von Flussdaten je Zeiteinheit als Reaktion auf die Messung des mindestens einen weiteren Sensors angepasst ist.

2. Die Vorrichtung nach dem vorstehenden Anspruch, weiter einen Temperatursensor (208) zum Messen der Temperatur von Flüssigkeit umfassend, die innerhalb der Vorrichtung fließt.

3. Die Vorrichtung nach einem der vorstehenden Ansprüche, wobei das Diffusionsmodul weiter einen Fluidik-Kanal umfasst, der mindestens eine Wand umfasst, wobei der Fluidik-Kanal angepasst ist, um Laminarfluss bereitzustellen, wobei sich ein Bereich der Wand zu einer Tasche zum Halten der mindestens einen Zelle öffnet, die Sorptionsmaterial umfasst, sodass im Laminarfluss durch den Kanal in Kontakt mit der Wand fließende Flüssigkeit in Kontakt mit dem Sorptionsmaterial im Bereich der Wand sein kann.

4. Die Vorrichtung nach einem der vorstehenden Ansprüche, wobei die mindestens eine Zelle eine Oberfläche umfasst, die angeordnet ist, um Flüssigkeit in dem Diffusionsmodul zu kontaktieren, und das Diffusionsmodul angepasst ist, um Fluss auf einer schiefen Ebene in Bezug auf die Schwerkraft zu erlauben, sodass eine Bildung von Blasen auf der Oberfläche von mindestens einer Zelle verringert wird.

5. Die Vorrichtung nach einem der vorstehenden Ansprüche, wobei das Diffusionsmodul eine Vielzahl von verschiedenen Zellen umfasst, die angepasst sind, um gleichzeitig verschiedene Arten von Zielanalyten zu kumulieren.

6. Die Vorrichtung nach einem der vorstehenden Ansprüche, wobei das Diffusionsmodul in einer flüssigkeitsdichten Einheit eingeschlossen ist, die angepasst ist, um Eindringen von Flüssigkeit außer durch den Einlass zu vermeiden, wobei die Vorrichtung konfiguriert ist, um Flüssigkeit in einer vorbestimmten Tiefe von der Oberfläche des Flüssigkeitskörpers durch das Einlass hindurch einzubringen.

7. Die Vorrichtung nach dem vorstehenden Anspruch, wobei die flüssigkeitsdichte Einheit ein erstes Fach umfasst, welches das Diffusionsmodul einschließt, und ein zweites Fach, das Elektronik von den Sensoren umfasst, das durch eine undurchlässige Barriere von dem ersten Fach getrennt ist.

8. Die Vorrichtung nach einem der vorstehenden Ansprüche, weiter eine Pumpe (104) zum Pumpen von Flüssigkeit durch den Einlass (101) hindurch in das Diffusionsmodul (110) umfassend, wobei die Pumpe optional konfiguriert ist, um einen steuerbaren Fluss an Flüssigkeit zu pumpen.

9. Die Vorrichtung nach einem der vorstehenden Ansprüche, weiter eine Speichereinheit zum vorübergehenden Ablegen der Flussdaten umfassend.

10. Ein Verfahren zum Sammeln von Zielanalyten aus einem Flüssigkeitskörper, umfassend Einleiten von Flüssigkeit in das Diffusionsmodul einer Vorrichtung nach einem der vorstehenden Ansprüche, Sammeln von Zielmaterial in mindestens einer Zelle, Ausbringen der Flüssigkeit aus dem Diffusionsmodul, Messen des Flüssigkeitsflusses durch das Diffusionsmodul hindurch, Senden des Messergebnisses des Flusses an ein Kommunikationsmodul und Senden der Signale an eine externe Einheit, weiter umfassend Abtasten physikalisch-chemischer Parameter der Flüssigkeit und weiter Ändern der Flussraten-Datenerfassung zum Optimieren von Flussdaten je Zeiteinheit als Reaktion auf die abgetasteten physikalisch-chemischen Parameter.

11. Das Verfahren nach dem vorstehenden Anspruch, weiter umfassend Überwachen des Flusses von Fluid durch Überwachen der von der externen Einheit empfangenen Signale.

12. Ein Verfahren zum Durchführen einer Abtastung passiver Dosierung von Toxizität, umfassend Sammeln von Proben aus einer Flüssigkeit und Flussmessung unter Verwendung der Vorrichtung nach einem der vorstehenden Ansprüche 1 bis 9 einen vorbestimmten Zeitraum lang, nach dem Durchführen eines Toxizitätstests an der Zelle.

13. Das Verfahren nach dem vorstehenden Anspruch, wobei Durchführen eines Toxizitätstests Ausbringen der Proben in ein vorbestimmtes Volumen von Flüssigkeit umfasst, die ursprünglich frei von Schadstoffen ist.

14. Das Verfahren nach dem vorstehenden Anspruch 12 oder 13, wobei Sammeln von Zielanalyten Pumpen von Flüssigkeit in die Vorrichtung zum Erhöhen der Aufnahme von Zielanalyten umfasst.

## Revendications

1. Un dispositif (100) pour collecter un analyte cible à partir d'un corps liquide, ledit dispositif comprenant
- une entrée (101) pour introduire le liquide du corps liquide dans le dispositif et une sortie (102) pour retirer le liquide du dispositif,
- un module de diffusion (110) connecté à l'entrée et à la sortie et comprenant en outre au moins une cellule pour collecter l'analyte cible à partir du liquide s'écoulant entre l'entrée et la sortie, et
- un débitmètre (103) adapté pour mesurer le flux de liquide à l'intérieur du dispositif,
dans lequel ledit dispositif comprend en outre un module de communication (120) comprenant une entrée (121) pour recevoir des signaux du débitmètre (103) et un émetteur (122) pour transmettre les signaux reçus de l'entrée à une unité externe, pour surveiller le flux de liquide à travers le module de diffusion,
comprenant en outre au moins un autre capteur pour mesurer les paramètres physico-chimiques du liquide, **caractérisé en ce que** ledit dispositif est en outre adapté pour changer l'acquisition des données de débit afin d'optimiser les données de débit par unité de temps en réponse à la mesure dudit au moins un autre capteur.

2. Le dispositif de la revendication précédente comprenant en outre un capteur de température (208) pour mesurer la température du liquide s'écoulant à l'intérieur du dispositif.

3. Le dispositif selon l'une quelconque des revendications précédentes, dans lequel le module de diffusion comprend en outre un canal fluidique comprenant au moins une paroi, le canal fluidique étant adapté pour fournir un écoulement laminaire, où une zone de la paroi s'ouvre sur une poche pour contenir ladite au moins une cellule comprenant un matériau adsorbant, de sorte que le liquide s'écoulant en écoulement laminaire à travers le canal en contact avec la paroi puisse être en contact avec le matériau adsorbant dans ladite zone de la paroi.

4. Le dispositif selon l'une quelconque des revendications précédentes, dans lequel ladite au moins une cellule comprend une surface disposée pour entrer en contact avec le fluide dans le module de diffusion et que le module de diffusion est adapté pour permettre un écoulement sur un plan incliné par rapport à la gravité de sorte que la formation de bulles sur la surface dudit au moins une cellule soit réduite.

5. Le dispositif selon l'une quelconque des revendications précédentes, dans lequel le module de diffusion comprend une pluralité de cellules différentes adaptées pour accumuler simultanément différents types d'analytes cibles.

6. Le dispositif selon l'une quelconque des revendications précédentes, dans lequel le module de diffusion est enfermé dans une unité étanche au liquide adaptée pour éviter l'entrée de liquide sauf par l'entrée, ledit dispositif étant configuré pour introduire le liquide à une profondeur prédéterminée à partir de la surface du corps liquide par l'entrée.

7. Le dispositif de la revendication précédente, dans lequel l'unité étanche au liquide comprend un premier compartiment enfermant le module de diffusion et un second compartiment comprenant l'électronique des capteurs, séparé du premier compartiment par une barrière imperméable.

8. Le dispositif selon l'une quelconque des revendications précédentes, comprenant en outre une pompe (104) pour pomper le liquide à travers l'entrée (101) dans le module de diffusion (110), éventuellement dans lequel la pompe est configurée pour pomper un flux de liquide contrôlable.

9. Le dispositif selon l'une quelconque des revendications précédentes, comprenant en outre une unité de mémoire pour stocker temporairement les données de flux.

10. Un procédé de collecte d'analytes cibles à partir d'un corps liquide comprenant l'introduction de liquide dans le module de diffusion d'un dispositif selon l'une quelconque des revendications précédentes, la collecte de matériau cible dans au moins une cellule, le retrait du liquide du module de diffusion, la mesure du débit de liquide à travers le module de diffusion, l'envoi de la mesure du débit à un module de communication et la transmission des signaux à une unité externe, comprenant en outre la détection des paramètres physico-chimiques du liquide et en outre le changement de l'acquisition des données de débit pour optimiser les données de débit par unité de temps en réponse aux paramètres physico-chimiques détectés.

11. Le procédé de la revendication précédente comprenant en outre la surveillance du débit de fluide en surveillant les signaux reçus sur l'unité externe.

12. Un procédé de réalisation de la détection de toxicité par dosage passif comprenant la collecte d'échantillons à partir d'un liquide et la mesure du débit à l'aide du dispositif selon l'une quelconque des revendications 1 à 9 pendant une période de temps prédéterminée, puis la réalisation de tests de toxicité sur la cellule.

13. Le procédé de la revendication précédente, dans lequel la réalisation de tests de toxicité comprend la libération des échantillons dans un volume prédéterminé de liquide initialement exempt de polluants.

14. Le procédé selon la revendication 12 ou 13, dans lequel la collecte d'analytes cibles comprend le pompage de liquide dans le dispositif pour augmenter l'absorption des analytes cibles.
